# FASCICULE DE BREVET EUROPEEN

(11) **EP 2 586 930 B1**
(45) Date de publication et mention de la délivrance du brevet: **11.05.2016**
(21) Numéro de dépôt: 12306317.4
(22) Date de dépôt: 24.10.2012
(51) Int. Cl.: B62B 3/04, B62B 3/02, B62B 3/10, E04F 21/18

(54) **Support de plaque ou panneau modulable en dimensions pour appareil de levage et de manutention en vue de leur pose au mur et au plafond**
Platten- oder Paneelträger mit veränderbarer Grösse, für eine Vorrichtung zum Heben und Manipulieren von Platten oder Paneelen für ihre Montage an Wänden oder Decken
Panel or plate support having changeable size, for an apparatus for lifting and handling plates or panels in order to mount them onto walls or ceilings

(30) Priorité: 28.10.2011 FR 1159801
(43) Date de publication de la demande: 01.05.2013
(73) Titulaire: Roger Mondelin SAS, 42820 Ambierle (FR)
(72) Inventeur: Narelli, Denis, 42370 Saint Haon le Chatel (FR)
(74) Mandataire: Cabinet Laurent & Charras

(56) Documents cités:
- WO-A1-03/097511
- FR-A1- 2 906 824
- US-A- 1 350 963
- US-B1- 7 708 250

## Description

L'invention se rattache au secteur technique des appareils de levage et de manutention des plaques ou panneaux de plâtre ou matériaux similaires pour le recouvrement de murs et plafonds.

Ces plaques ou panneaux sont de dimensions conséquentes avec, donc, un poids en relation. Ces plaques étant de plus en plus épaisses, de l'ordre de 8 à 23 mm et de 13 mm pour les plus courantes, les fabricants ont ainsi été amenés à modifier la largeur des plaques en les diminuant pour répondre à cette contrainte de poids, faciliter leur manipulation, mais aussi tenir compte des conséquences dues à la fatigue pour les opérateurs. En conséquence, sur le marché, on trouve actuellement des plaques de différentes largeurs 600, 900 ou 1200 mm.

Les supports de plaque adaptés sur les appareils de levage sont ainsi constitués généralement d'un bras porteur (1) comprenant deux profilés (la-1b) creux, solidarisés entre eux de manière connue et intégrant des rallonges (1c) pour s'adapter à la longueur des plaques ou panneaux à transporter et à poser. Ces rallonges sont montées coulissantes et réglables dans chacun des profilés (1a-1b) et ont une extrémité en "T" Le support de plaque est lui-même monté de manière connue de manière escamotable par le biais d'une base support sur un mât télescopique (5) de l'appareil de levage et de manutention (A) connu en lui-même du fabricant et de la concurrence.

Le bras porteur est agencé lui-même avec des couples de traverses (2) (3) disposées de part et d'autre de ce dernier. Les traverses (2) et (3) sont généralement de longueurs différentes avec des traverses (2) plus courtes et des traverses (3) plus longues. Ces dernières peuvent être rabattues, de manière connue, le long du dit bras porteur pour en faciliter le transport et réduire l'encombrement. Les traverses courtes sont fixées par soudure le long du bras porteur.

La problématique étant de tenir compte de l'existence de plaques ou panneaux de largeurs variables, le Demandeur a ainsi développé une conception améliorée du support de plaques ou panneaux avec la création d'un concept de dispositif support de butées réglable en position sur les traverses longues objet du brevet FR 2 906 824. Selon ce document représentées à la figure 2 au titre de l'art antérieur les traverses longues sont aménagées avec une pluralité de trous à des distances variées le long de chaque traverse considérée en recevant à coulissement et à verrouillage sur la position désirée du dispositif support de butée.

Ce dispositif support, selon ce document, inclut différents composants, avec notamment un support-récepteur monobloc assurant différentes fonctions de coulissement le long de la traverse, de réception de butée de plaque ou panneau de réception, d'un organe de verrouillage et de limitation de course, d'un moyen de rappel élastique.

Ce dispositif exploité par le Demandeur reste néanmoins de construction complexe avec les différents composants concernés et son usage est limité à une gamme de lève-plaque, à savoir dont la conception et l'agencement est le plus optimisé.

La démarche du Demandeur a donc été de repenser à la conception de ces supports de plaques ou panneaux en vue de généraliser la solution retenue pour tous types de lèves-plaques, et ce, dans des conditions économiques satisfaisantes, à coût réduit, surtout à mise en oeuvre facile et rapide pour l'opérateur.

En outre, le souci du Demandeur était de sécuriser l'utilisation du support de plaques ou panneaux en toutes circonstances et d'agencement en utilisation pour des largeurs variables de plaques ou panneaux notamment celles connues actuellement sur le marché 600, 900 et 1200 mm, sans exclure d'autres dimensions pouvant apparaître selon le besoin.

La solution apportée par le Demandeur répond à tous ces objectifs, en maîtrisant tous les paramètres de coût, de mise en oeuvre, de simplicité d'adaptation, et aussi de sécurité une fois la mise en oeuvre choisie pour une largeur donnée de plaques.

Ainsi, selon l'invention, le dispositif support de plaque ou panneau adaptable sur un appareil de levage ou de manutention comprenant un bras porteur constitué de profilés creux recevant des rallonges réglables en position et deux couples de traverses de part et d'autre de son axe longitudinal, c'est-à-dire un couple de traverses longues et un couple de traverses courtes, est remarquable en ce que le dispositif support est conçu sous la forme d'un module définissant une largeur de plaques ou panneaux à recevoir, variable selon la position et l'orientation respectives dudit couple de traverses courtes et dudit couple de traverses longues par rapport au bras porteur selon une géométrie variable correspondant à des largeurs différentes de plaques et panneaux avec des parties d'extrémités pivotantes desdites traverses courtes et longues, et en ce que chacune desdites traverses courtes et longues est articulée par rapport au bras porteur de manière à permettre son pivotement par rapport au bras porteur entre deux positions, soit une première position de ladite traverse en situation perpendiculaire à l'axe longitudinal du bras porteur et une deuxième position de ladite traverse en situation parallèle à l'axe longitudinal du bras porteur, et en ce que les dites traverses courtes et longues sont elles-mêmes agencées à leur extrémités libres pour recevoir de manière démontable des ensembles de butées escamotables positionnées en extrémité des traverses en fonction de la largeur de la plaque ou panneau à poser, et en ce que les parties d'extrémités pivotantes des dites traverses courtes et longues sont agencées avec des moyens de verrouillage en position dans des plans perpendiculaires ou parallèles par rapport au bras porteur.

Ces caractéristiques et d'autres encore ressortiront bien de la suite de la description.

Pour fixer l'objet de l'invention illustré d'une manière non limitative aux figures des dessins, où :

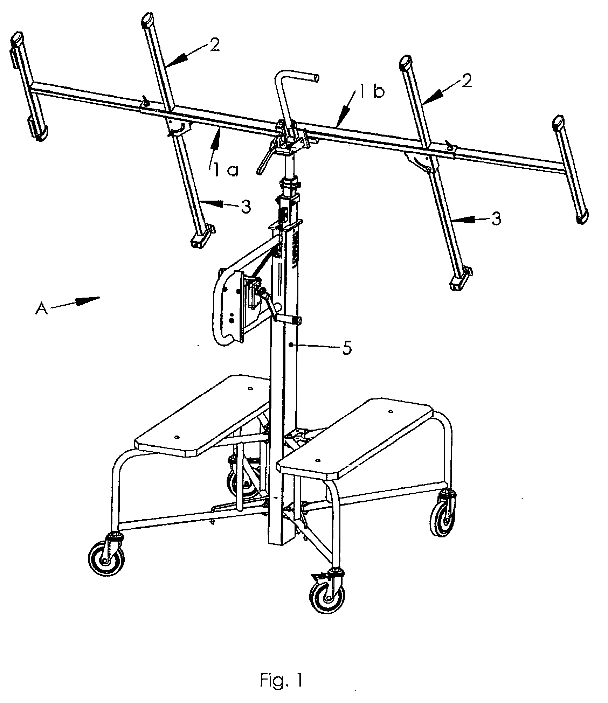

La figure 1 est une vue à caractère illustratif d'un appareil de levage et de manutention dit lève-plaque selon l'art antérieur avec une mise en oeuvre d'un support de plaques ou panneaux connue,

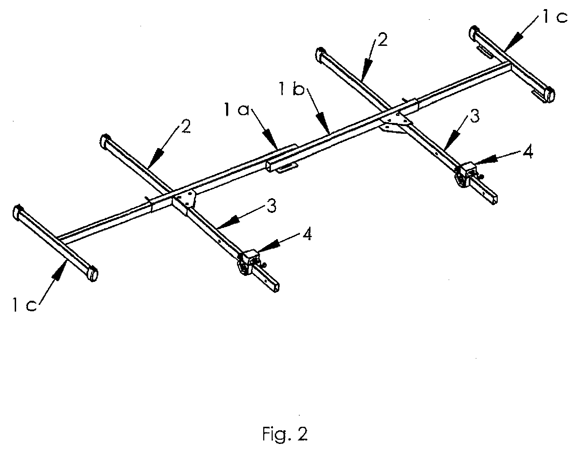

La figure 2 est une vue en perspective du support de plaques seul agencé selon le brevet français FR 2 906 824 du Demandeur au titre de l'art antérieur.
La figure 3 est une vue en perspective du support de plaque selon l'invention dans sa configuration géométrique de développement maximum pour des plaques ou panneaux de grande largeur, par exemple, 1200 mm.
La figure 4 est une vue en perspective du support de plaque selon la figure 3 dans sa configuration géométrique de développement intermédiaire pour des plaques ou panneaux de largeur intermédiaire, par exemple 900 mm,
La figure 5 est une vue en perspective du support de plaque selon les figures 3 et 4 dans sa configuration géométrique de développement minimum pour des plaques ou panneaux de largeur minimum, par exemple 600 mm,
La figure 6 est une vue en perspective éclatée avant montage d'une butée escamotable et de ses composants susceptibles d'être positionnée à l'une des extrémités des traverses longues ou courtes,
La figure 7 est une vue en perspective du support de plaque selon l'invention dans une situation de pliage ou pré-pliage de certaines de ses traverses,
La figure 8 est une vue à grande échelle d'un détail identifié figure 7 sur l'articulation et le verrouillage des traverses,
La figure 9 est une vue en perspective du bras porteur sans les traverses et les articulations
La figure 10 est une vue à grande échelle d'un détail identifié figure 9 sur le bras porteur.
La figure 11 est une vue de dessus du détail du bras porteur représenté à la figure 10
La figure 12 est une vue partielle en perspective éclatée avant le montage des composants de la butée escamotable en extrémité de l'une des traverses,
La figure 13 est une vue partielle de dessus illustrant le montage de la butée escamotable dans une traverse,

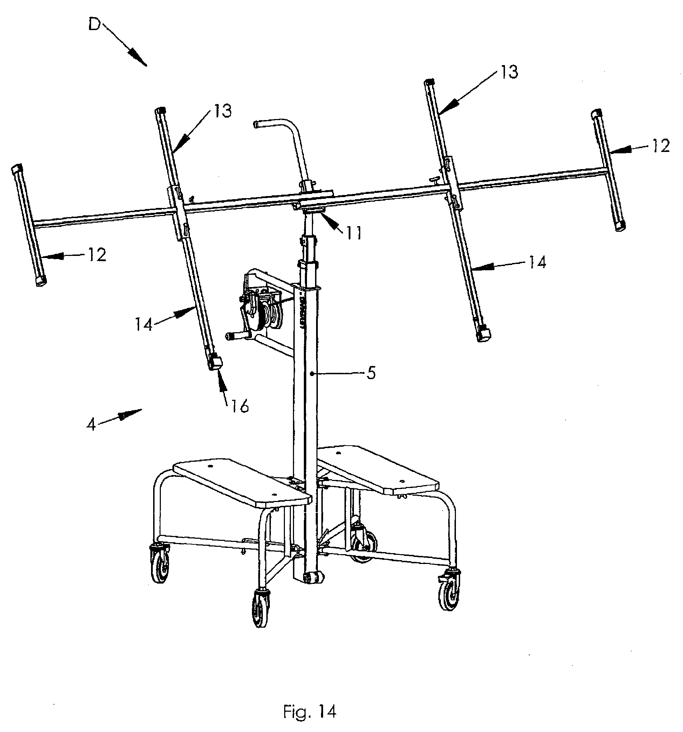

La figure 14 est une vue d'un appareil lève-plaque agencé d'un support de plaque conçu selon l'invention.

Afin de rendre plus concret l'objet de l'invention, on le décrit maintenant d'une manière non limitative illustrée aux figures des dessins.

Le dispositif support de plaques ou panneaux selon l'invention est référencé par (D). Il comprend un bras porteur (10) constitué de deux profilés (10a-10b) creux de section intérieure carrée ou rectangulaire et solidaires entre eux à une extrémité par soudure, vissage, ou autres moyens de liaison. Dans cette zone, les dits profilés sont liés à une base support (11) qui est aménagée de manière connue pour recevoir des moyens pénétrant dans le mât de l'appareil de levage. Ces deux profilés autorisent l'insertion de rallonges (12) connues en soi dont l'extrémité (12a) a une configuration en "T", ces rallonges étant réglables en position à partir des dits profilés récepteurs (10a-10b).

Selon l'invention, le dispositif support comprend des couples de traverses respectivement (13) et (14) disposées deux à deux, de part et d'autre du bras porteur, et étant articulées par rapport à celui-ci. A cet effet, deux manchons (15) creux de section carrée ou rectangulaire sont positionnés dans un plan perpendiculaire par rapport à chacun des profilés (10a-10b) du bras porteur en débordant de part et d'autre de ces derniers.

Chaque manchon (15) présente sur ces flancs latéraux (15a) une ouverture (15b) traversante pour la réception de l'un ou l'autre des profilés (10a-10b) et le passage des rallonges (12). Chaque manchon (15) est à position fixe par soudage ou autre par rapport au profilé correspondant (10a-10b). Par ailleurs chaque manchon est agencé à l'endroit de chacune de ses extrémités pour recevoir l'une des traverses (13) (14) longue ou courte et aussi leur verrouillage en position soit dans un plan perpendiculaire par rapport au bras porteur, soit dans une position rabattue en étant parallèle au profilé (10a-10b) qui lui est associé, d'un côté ou de l'autre de celui-ci par rapport à l'axe longitudinal du bras support. Les modalités particulières et agencement des parties de manchons récepteurs des traverses (13) (14) seront décrits par la suite.

Par ailleurs, les extrémités libres (13c) (14c) des traverses sont susceptibles de recevoir des butées escamotables (16) qui sont montées alternativement selon les besoins sur les traverses (13) (14) selon la configuration géométrique en dimensions en largeur de la plaque de plâtre. Les butées escamotables (16) sont fixées aux dites traverses de manière démontable et rapide ainsi qu'il sera précisé par la suite. Les butées escamotables ont pour fonction notamment de tenir en position la plaque de plâtre sur le dispositif support tel que déployé selon la configuration choisie.

Ainsi, l'utilisateur pourra très facilement opter pour la configuration géométrique qui lui sera le plus appropriée en fonction de la largeur de la plaque ou panneau, en ajustant en position les traverses (13) (14) et en intégrant les butées escamotables en extrémité des traverses sélectionnées pour assurer la fonction de retenue de la plaque ou panneau.

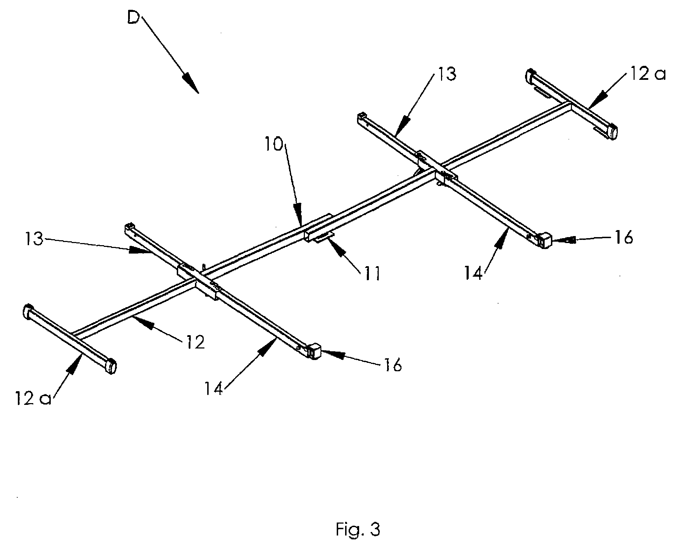

Ainsi, si on se réfère aux figures 3, 4 et 5 des dessins, on a représenté la position des traverses dans les différentes situations.

Figure 3, le dispositif support est développé complètement avec les quatre traverses (13) (14) en situation perpendiculaire au bras porteur, et correspondant à une plaque ou panneau de largeur 1200 mm. Dans ce cas, les butées escamotables (16) sont montées sur les traverses les plus longues.

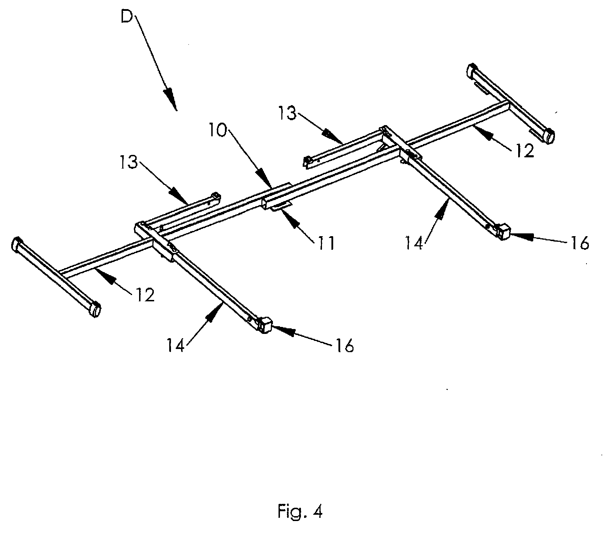

Figure 4, le dispositif support est adapté pour une largeur de plaque ou panneau de 900 mm. L'opérateur déverrouille les traverses les plus courtes (13) par rapport aux manchons et les fait pivoter de 90° pour être dans un plan parallèle au bras porteur. Les traverses les plus longues (14) restent dans un plan perpendiculaire au bras porteur. Les butées escamotables (16) sont introduites dans les extrémités de traverses les plus longues.

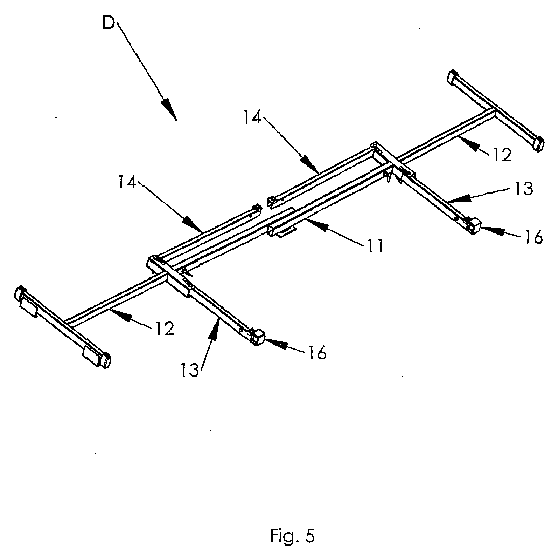

Figure 5, le dispositif support est adapté pour une largeur de plaque ou panneau de 600 mm. L'opérateur déverrouille les traverses les plus longues (14) par rapport aux manchons et les fait pivoter de 90° pour être dans un plan parallèle au bras porteur. Les traverses les plus courtes (13) restent dans un plan perpendiculaire au bras porteur. Les butées escamotables (16) sont introduites dans les extrémités de traverses les plus courtes.

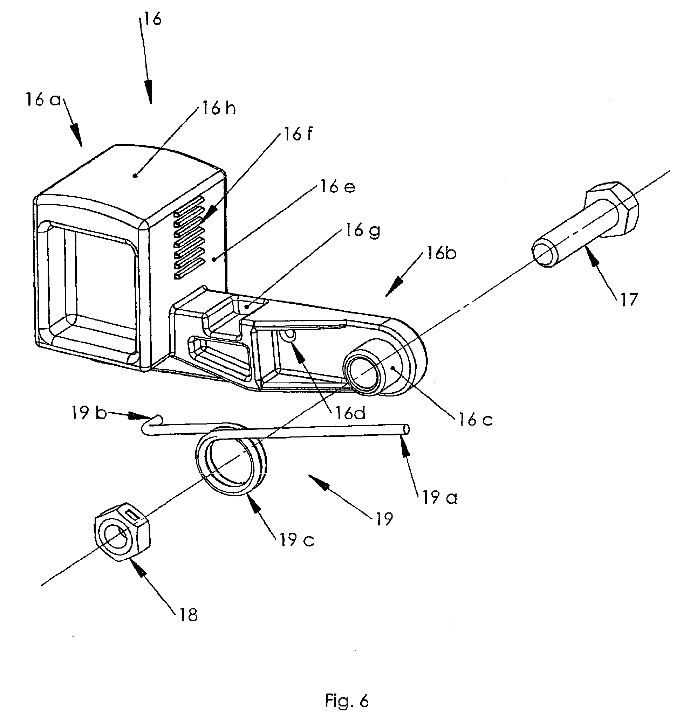

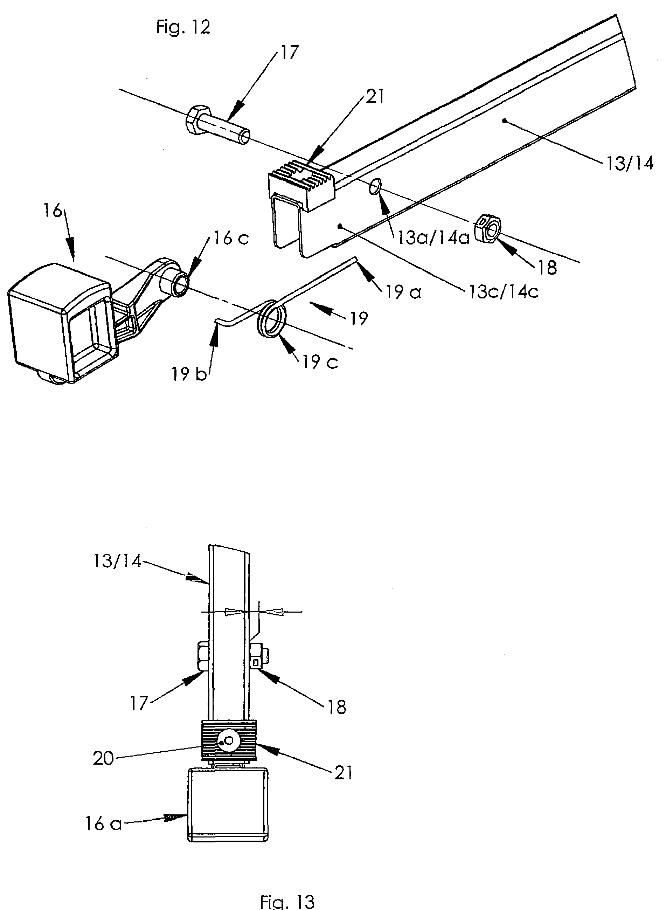

Il convient maintenant d'expliciter la constitution des butées escamotables en se référant aux figures 6, 12 et 13.

Il est précisé que les extrémités des traverses (13 et (14) sont débouchantes sur un côté donnant une configuration en "U" de la dite partie d'extrémité et ce pour permettre la réception et l'articulation de la butée escamotable.

Chaque butée escamotable (16) est constituée par un bloc (16a) de configuration parallélépipédique en forme de cube par exemple (16a) en se prolongeant d'un côté latéral par un appendice (16b) de grande longueur susceptible de pénétrer à l'intérieur de la traverse réceptrice (13) ou (14). La traverse présente ainsi sur ses parois latérales un trou (13a) (14a) autorisant d'une part l'insertion d'un doigt (16c) conformé en extrémité de l'appendice (16b). Ce doigt est creux et autorise l'insertion d'un axe (17) pénétrant dans la traverse considérée et étant associée à un écrou de blocage (18). Le doigt (16c) précité forme ainsi pivot par rapport à l'axe (17) précité en permettant un basculement contrôlé de la butée escamotable. Pour ce faire, un moyen élastique de rappel tel qu'un ressort à épingle (19) ou moyen équivalent est disposé et monté par sa partie boucle (19c) sur le doigt (16c) formé sur l'appendice en prenant appui par une extrémité (19a) sur la face interne supérieure de la traverse réceptrice. L'autre extrémité (19b) du dit ressort se loge dans une cavité (16d) formée latéralement sur l'appendice. La face (16e) de la butée en contact avec le chant de la plaque ou panneau à retenir peut présenter une succession de crans (16f) d'appui de la plaque ou panneau précité. La face supérieure (16h) de la butée vient en regard et dans le même plan que la partie supérieure du dispositif support de plaque permettant la pose de la plaque ou panneau. Le démontage ou montage de la butée escamotable dans l'une ou l'autre des traverses (13) ou (14) est extrêmement facile à mettre en oeuvre par une simple action de déverrouillage des moyens (17) et (18). L'appendice (16b) présente sur sa face supérieure une cavité (16g) permettant de loger l'extrémité d'un moyen de fixation (20) d'un tampon (21) de traverse.

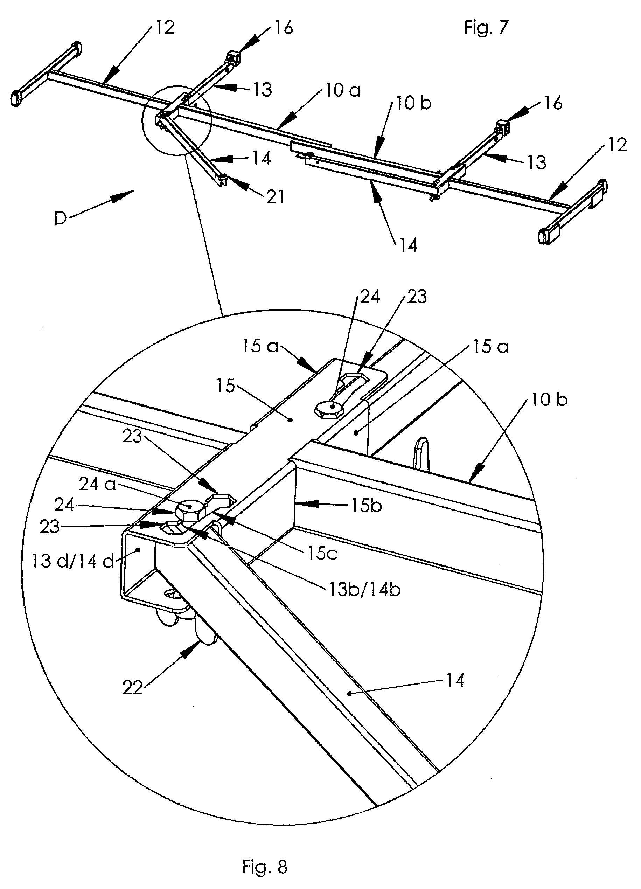

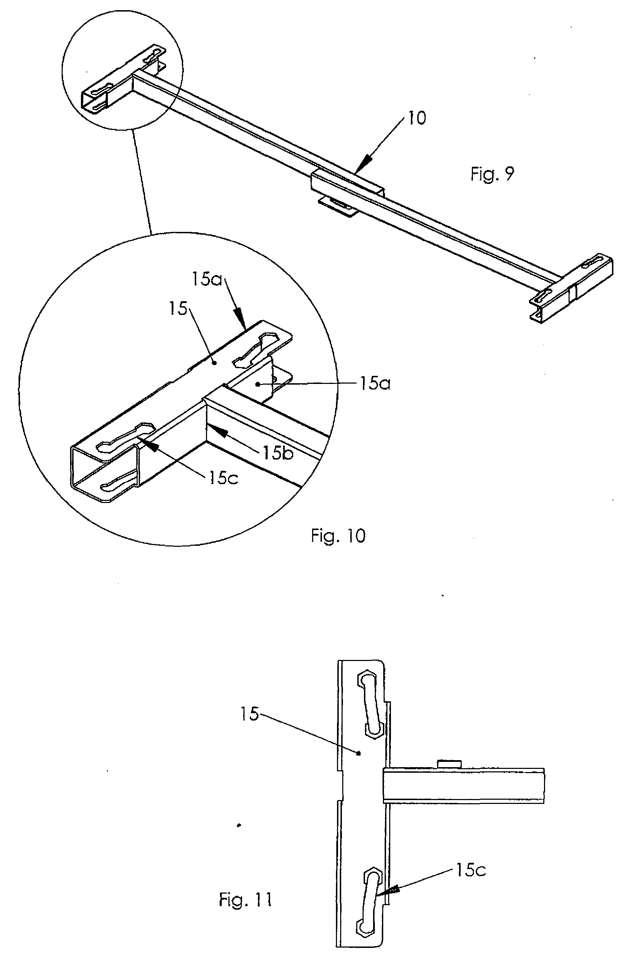

Il convient maintenant en se référant aux figures 7 - 8 - 9 - 10 et 11 de décrire le mode d'articulation des traverses par rapport à leurs manchons récepteurs.

Chaque manchon (15) est agencé à ses extrémités pour permettre l'articulation et le pivotement des traverses (13) ou (14) selon les besoins. Les traverses présentent ainsi sur leurs ailes, en regard, une ouverture (13b) (14b) pour le passage d'un axe d'articulation (24). Les ailes de chaque extrémité de manchons qui entourent l'extrémité correspondante de la traverse sont également agencées avec des ouvertures (15c) pour le passage de l'axe d'articulation (24) selon une trajectoire bien définie. Un écrou à oreille (22) assure la fixation et la liaison entre eux. Selon une disposition particulière de l'invention, de part et d'autre des ouvertures formées pour le passage de l'axe précité, sont prévus en opposition des logements (23) établis selon une section polygonale à pans, correspondant au profil de la tête (24a) de l'axe d'articulation (24). Ce dernier vient donc dans l'un des deux logements (23) précités ainsi conformés pour assurer un verrouillage en position de la traverse (13) ou (14) dans l'une des deux positions perpendiculaires ou parallèles au bras porteur. Ainsi, l'extrémité de la traverse est susceptible de venir en contre-appui contre la face interne en regard de la partie d'extrémité du manchon. Les deux logements opposés par rapport à l'ouverture réceptrice de l'axe de pivotement permettent le positionnement de la traverse dans l'une de ces deux positions.

La position du logement (23) situé à proximité des extrémités des manchons se trouve décalée de l'axe de la trajectoire définissant les ouvertures, cela permet ainsi d'amener l'extrémité de la traverse en contre-appui contre la face interne du manchon, pour un positionnement parallèle de la traverse par rapport au bras porteur.

La mise en oeuvre de l'articulation s'effectue ainsi de la manière suivante. Le desserrage de l'écrou à oreille (22) permet de libérer la tête (24a) de la vis (24) de son logement récepteur (23) et de pouvoir déplacer la vis à l'intérieur de la zone d'ouverture formée par la succession des logements et d'ouverture centrale. On positionne ainsi la traverse dans le manchon en vue de la présenter en position perpendiculaire ou parallèle par rapport au bras porteur. On procède alors au pivotement de la traverse le long du bras porteur et ensuite à une nouvelle immobilisation de la tête de vis dans le second logement considéré avec verrouillage et serrage de l'écrou à oreille.

On obtient ainsi une sécurité renforcée dans le positionnement des traverses.

Selon la configuration des appareils de levage et de manutention de plaques, l'opérateur peut être amené pour assurer les différentes combinaisons de positionnement des traverses en vue d'obtenir des positionnements de celles-ci en fonction des largeurs de plaques, à faire subir une rotation de 180° au bras porteur par rapport à la base support (11). A cet effet, le bras porteur peut être soulevé et sorti par rapport à la base support (11) puis réintroduit dans celle-ci avec une orientation différente à 180°. Cela permet à l'opérateur de modifier le positionnement des butées escamotables très facilement.

L'invention trouve de nombreux avantages, et en particulier, on souligne cette adaptabilité du dispositif support de plaque ou panneau en fonction de la largeur de la plaque ou panneau considéré. Les manoeuvres sont aisées. L'utilisation de deux butées (16) escamotables permet leur positionnement alternatif dans les extrémités des traverses selon la configuration donnée, en évitant de mettre en oeuvre quatre butées escamotables et en réduisant ainsi les coûts.

## Revendications

1. Dispositif support de plaque ou panneau adaptable sur un appareil de levage ou de manutention comprenant un bras porteur (10) constitué de profilés (10a) (10b) creux recevant des rallonges réglables en position et deux couples de traverses de part et d'autre de son axe longitudinal, c'est-à-dire un couple de traverses longues (14) et un couple de traverses courtes (13), **caractérisé en ce que** le dispositif support (D) est conçu sous la forme d'un module définissant une largeur de plaques ou panneaux à recevoir, variable selon la position et l'orientation respectives du dit couple de traverses courtes (13) et du dit couple de traverses longues (14) par rapport au bras porteur (10) selon une géométrie variable correspondant à des largeurs différentes de plaques et panneaux avec des parties d'extrémités pivotantes desdites traverses courtes (13) et longues (14), et **en ce que** chacune desdites traverses courtes (13) et longues (14) est articulée par rapport au bras porteur (10) de manière à permettre son pivotement par rapport au bras porteur (10) entre deux positions, soit une première position de ladite traverse en situation perpendiculaire à l'axe longitudinal du bras porteur (10) et une deuxième position de ladite traverse en situation parallèle à l'axe longitudinal du bras porteur (10), et **en ce que** les dites traverses courtes (13) et longues (14) sont elles-mêmes agencées à leur extrémité libre (13c)(14c) pour recevoir de manière démontable des ensembles de butées escamotables (16) positionnées en extrémité des traverses (13)(14) en fonction de la largeur de la plaque ou panneau à poser, et **en ce que** les parties d'extrémités pivotantes des dites traverses courtes (13) et longues (14) sont agencées avec des moyens de verrouillage (17)(18) (22)(24) en position dans des plans perpendiculaires ou parallèles par rapport au bras porteur (10).

2. Dispositif support selon la revendication 1, **caractérisé en ce qu'**il comprend à partir du bras porteur (10) des manchons (15) creux disposés dans un plan perpendiculaire aux profilés (10a) (10b) du bras porteur, et **en ce que** chaque manchon présente sur ses flancs latéraux une ouverture (15b) traversante pour la réception de l'un ou l'autre des profilés (10a) (10b) et le passage des rallonges 12, et **en ce que** chaque manchon est agencé à l'endroit de chacune de ses extrémités pour recevoir l'une des traverses (13) (14), longue ou courte, et assurer aussi leur verrouillage en position, soit dans un plan perpendiculaire par rapport au bras porteur, soit dans une position rabattue en étant parallèle aux profilés (10a) (10b) qui lui est associé d'un côté ou de l'autre de celui-ci par rapport à l'axe longitudinal du bras support.

3. Dispositif support selon la revendication 2, **caractérisé en ce que** les traverses présentent sur leurs ailes destinées à être engagées dans les parties d'extrémité des manchons, une ouverture (13b) (14b) pour le passage d'un axe d'articulation (24), et **en ce que** les ailes de chaque extrémité de manchon présentent des ouvertures (15c) pour le passage du dit axe (24), et **en ce qu'**un écrou à oreille (22) assure la fixation et liaison de l'ensemble, et **en ce que** de part et d'autres des dites ouvertures (15c) sont disposés en opposition des logements (23) établis selon une configuration correspondant au profil de la tête (24a) de l'axe d'articulation (24) pour assurer le blocage en position de l'axe (24) et de la traverse (13) ou (14) qui lui est associée selon la position de la traverse perpendiculaire ou parallèle au bras porteur.

4. Dispositif support selon la revendication 1, **caractérisé en ce que** des butées escamotables (16) sont susceptibles d'être positionnées à l'extrémité libre des traverses (13) et (14), et **en ce que** chaque butée (16) est constituée par un bloc (16a) des configurations parallépipédiques se prolongeant d'un côté latéral par un appendice (16b) de grande longueur pénétrant à l'intérieur de la traverse réceptrice (13) ou (14), et **en ce que** chaque traverse présente entre ses parois latérales en extrémité le passage d'un doigt (16c) formant pivot disposé en extrémité de l'appendice (16b) et recevant dans sa cavité intérieure un axe de pivotement (17) traversant les ailes de la traverse considérée, et **en ce qu'**un moyen élastique de rappel (19) associé au dit doigt permet le basculement contrôlé de la butée escamotable (16).

5. Dispositif support selon la revendication 4, **caractérisé en ce que** le moyen élastique de rappel (19) est un ressort à épingle qui présente une partie boucle (19c) montée sur le doigt (16c) tandis que ses extrémités (19a) (19b) viennent respectivement en appui sur la face interne supérieure de la traverse réceptrice et dans une cavité (16d) formée latéralement sur l'appendice.

6. Dispositif support selon la revendication 4, **caractérisé en ce que** la face (16e) de la butée en contact avec le chant de la plaque ou panneau présente des crans d'appui (16f).

7. Dispositif support selon la revendication 4, **caractérisé en ce que** l'appendice (16b) présente sur sa face supérieure une cavité (16g) permettant le logement d'un moyen de fixation (20) d'un tampon (21) de traverse.

## Patentansprüche

1. Auf eine Hebe oder Fördereinrichtung anpassbare Haltevorrichtung zum Halten einer Platte oder eines Paneels mit einem Tragarm (10), der aus Hohlprofilen (10a) (10b) zur Aufnahme von lageverstellbaren Verlängerungen und zwei Querträgerpaaren zu beiden Seiten seiner Längsachse, d. h. einem langen Querträgerpaar (14) und einem kurzen Querträgerpaar (13) besteht, **dadurch gekennzeichnet, dass** die Haltevorrichtung (D) als Modul ausgebildet ist, welches eine Breite der aufzunehmenden Platten oder Paneele definiert, die je nach Lage und Orientierung des kurzen Querträgerpaars (13) und des langen Querträgerpaars (14) bezogen auf den Trägerarm (10) und nach einer variablen Geometrie, die den verschiedenen Platten- oder Paneelbreiten entspricht, mit schwenkbaren Endteilen dieser kurzen (13) und langen (14) Querträger variabel ist, und dass jeder dieser kurzen (13) und langen (14) Querträger bezogen auf den Trägerarm (10) gelenkig gelagert ist, so dass seine Schwenkung bezogen auf den Trägerarm (10) zwischen zwei Positionen ermöglicht wird, nämlich einer ersten Position des Querträgers in senkrechter Lage zur Längsachse des Trägerarms (10) und einer zweiten Position des Querträgers in paralleler Lage zur Längsachse des Trägerarms (10), und dass die kurzen (13) und langen (14) Querträger ihrerseits an ihrem freien Ende (13c)(14c) zur abnehmbaren Aufnahme von einklappbaren Anschlägen (16) an den Enden der Querträger (13)(14) in Abhängigkeit von der Breite der aufzusetzenden Platte oder des aufzusetzenden Paneels ausgebildet sind, und dass die schwenkbaren Endteile der kurzen (13) und langen (14) Querträger mit Verriegelungsmitteln (17)(18) (22)(24) in den Ebenen senkrecht oder parallel zum Trägerarm (10) ausgebildet sind.

2. Haltevorrichtung nach Anspruch 1, **dadurch gekennzeichnet, dass** die Haltevorrichtung ausgehend vom Trägerarm (10) in einer Ebene senkrecht zu den Profilen (10a) (10b) des Trägerarms hohle Muffenstücke (15) enthält, und dass jedes Muffenstück an seinen Seitenteilen eine durchgehende Öffnung (15b) zur Aufnahme eines der Profile (10a) (10b) und zur Durchführung der Verlängerungen 12 aufweist, und dass jedes Muffenstück an jedem seiner Enden so ausgebildet ist, dass es einen der langen oder kurzen (13) (14) Querträger aufnehmen und auch dessen Verriegelung in der gewünschten Position gewährleisten kann, entweder in einer Ebene senkrecht zum Trägerarm oder in angeklappter und zugleich paralleler Position zu den Profilen (10a) (10b), welcher ihm bezogen auf die Längsachse des Trägerarms auf der einen oder anderen Seite zugeordnet ist.

3. Haltevorrichtung nach Anspruch 2, **dadurch gekennzeichnet, dass** die Querträger an ihren Flügeln, die in die Endteile der Muffenstücke eingefügt werden sollen, eine Öffnung (13b) (14b) zum Durchstecken einer Gelenkachse (24) aufweisen, und dass die Flügel an jedem Muffenstückende Öffnungen (15c) zum Durchstecken dieser Achse (24) aufweisen, und dass eine Flügelmutter (22) die Befestigung und Verbindung der Baugruppe sicherstellt, und dass zu beiden Seiten von diesen Öffnungen (15c) entsprechend gegenüberliegend Aussparungen (23) angeordnet sind, deren Konfiguration dem Kopfprofil (24a) der Gelenkachse (24) zur Lagesicherung der Achse (24) und des zugeordneten Querträgers (13) oder (14) entspricht, je nach senkrechter oder paralleler Lage des Querträgers zum Tragarm.

4. Haltevorrichtung nach Anspruch 1, **dadurch gekennzeichnet, dass** die einklappbaren Anschläge (16) am freien Ende der Querträger (13) und (14) positionierbar sind, und dass jeder Anschlag (16) aus einem Block (16a) gebildet wird, wobei die quaderfönnigen Konfigurationen auf der einen Seite in einen Fortsatz (16b) großer Länge auslaufen, der in das Innere des aufnehmenden Querträgers (13) oder (14) eindringt, und dass jeder Querträger zwischen seinen Seitenwänden am Ende die Durchführung eines Fingers (16c) aufweist, welcher am Ende des Fortsatzes (16b) angeordnet als Gelenkpunkt dient und in seinem inneren Hohlraum eine die Flügel des jeweiligen Querträgers durchquerende Schwenkachse (17) aufnimmt, und dass ein dem Finger zugeordnetes elastisches Rückstellmittel (19) ein kontrolliertes Umschwenken des einklappbaren Anschlags (16) ermöglicht.

5. Haltevorrichtung nach Anspruch 4, **dadurch gekennzeichnet, dass** es sich bei dem elastischen Rückstellmittel (19) um eine Haarnadelfeder handelt, die einen ringförmigen, auf den Finger (16c) aufgesteckten Abschnitt (19c) aufweist, während ihre Enden (19a) (19b) jeweils an der oberen Innenseite des aufnehmenden Querträgers und in einem seitlich auf dem Fortsatz ausgebildeten Hohlraum (16d) anliegen.

6. Haltevorrichtung nach Anspruch 4, **dadurch gekennzeichnet, dass** die Seite (16e) des Anschlags, die mit der Platten- oder Paneelkante in Berührung kommt, Stützkerben (16f) aufweist.

7. Haltevorrichtung nach Anspruch 4, **dadurch gekennzeichnet, dass** der Fortsatz (16b) an seiner Oberseite eine Aushöhlung (16g) zur Aufnahme eines Befestigungsmittels (20) für einen Querträgerpuffer (21) aufweist.

## Claims

1. A plate or panel support device on a suitable lifting or handling apparatus comprising a carrier arm (10) consisting of hollow sections (10a) (10b) receiving adjustable leaves in position and two crosspieces pairs on either side of its longitudinal axis, that is to say a pair of long crosspieces (14) and a pair of short crosspieces (13), **characterized in that** the support device (D) is designed as a module defining a width of plates or panels to be received variable depending on the respective position and orientation of said pair of short crosspieces (13) and said pair of long crosspieces (14) relative to the bearer arm (10) according to a variable geometry corresponding to different plate and panel widths, with pivoting end portions of said short (13) and long (14) crosspieces, and **in that** each of said short (13) and long (14) crosspieces is hinged relative to the carrier arm (10) so as to allow its pivoting relative to the carrier arm (10) between two positions, namely a first position of said crosspiece perpendicular to the longitudinal axis of the carrier arm (10) and a second position of said crosspiece parallel to the longitudinal axis of the carrier arm (10), and **in that** said short (13) and long (14) crosspieces are themselves arranged at their free end (13c) (14c) for receiving in a removable manner sets of retractable stops (16) positioned at the end of the crosspieces (13) (14) depending on the plate or panel width to be placed, and **in that** the pivoting end parts of said short (13) and long (14) crosspieces are provided with locking means (17) (18) (22) (24) in position in perpendicular or parallel planes relative to the carrier arm (10).

2. The support device according to claim 1, **characterized in that** it comprises from the carrier arm (10) hollow sleeves (15) arranged in a plane perpendicular to the sections (10a) (10b) of the carrier arm, and **in that** each sleeve has on its lateral sides a therethrough opening (15b) for the receipt of one or the other of the sections (10a) (10b) and the passage of the leaves (12), and **in that** each sleeve is arranged, at the location of each of its ends, for receiving one of the long or short crosspieces (13) (14), and also for ensuring their locking in position, or in a plane perpendicular to the carrier arm, or in a folded position parallel to the sections (10a) (10b) associated therewith on either side with respect to the longitudinal axis of the carrier arm.

3. The support device according to claim 2, **characterized in that** the crosspieces have on their wings to be engaged in the end parts of the sleeves an opening (13b) (14b) for the passage of a hinge pin (24), and **in that** the wings of each sleeve end have openings (15c) for the passage of said pin (24), and **in that** a wing nut (22) ensures the attachment and binding of overall, and **in that** on both sides of said openings (15c) are arranged opposite housings (23) established in a configuration corresponding to the profile of the head (24a) of the hinge pin (24) to ensure the locking in position of the axis (24) and the crosspiece (13) or (14) associated therewith according to the crosspiece position perpendicular or parallel to the carrier arm.

4. The support device according to claim 1, **characterized in that** retractable stops (16) are likely to be positioned at the free end of the crosspieces (13) and (14), and **in that** each stop (16) consisting in a block (16a) of the parallelepipedal configurations extending from one lateral side by the way of a great length appendix (16b) into the interior of the receiving crosspiece (13) or (14), and **in that** each cross member has between its lateral walls, at the end, the passage of a finger (16c) forming a pivot disposed at the end of the appendix (16b), and receiving in its inside cavity a pivot axis (17) passing through the wings of the crosspiece considered, and that elastic return mean (19) associated with said finger allows the controlled tilting of the retractable stop (16).

5. The support device according to claim 4, **characterized in that** the elastic return mean (19) is a hairpin spring having a loop portion (19c) mounted on the finger (16c) while its ends (19a) (19b) respectively bear against the upper inner face of the receiving crosspiece and into a cavity (16d) formed laterally on the appendix.

6. The support device according to claim 4, **characterized in that** the face (16e) of the stop in contact with the edge of the plate or panel has bearing notches (16f).

7. The support device according to claim 4, **characterized in that** the appendix (16b) has on its upper surface a cavity (16g) for receiving a fastening mean (20) of a crosspiece buffer (21).
